# EUROPEAN PATENT APPLICATION

(11) **EP 4 722 313 A1**
(43) Date of publication of application: **08.04.2026**
(21) Application number: 24814919.7
(22) Date of filing: 08.03.2024
(51) Int. Cl.: C09D 17/00, C09C 1/44, C09D 7/61, C09D 11/02, C09D 13/00, C09D 201/00

(54) **CARBON-BASED COLORING COMPOSITION**

(30) Priority: 29.05.2023 JP 2023087838
(71) Applicant: FUJI PIGMENT CO., LTD., Kawanishi-shi, Hyogo-ken 666-0015 (JP); GS Alliance Co., Ltd., Kawanishi-shi, Hyogo, 666-0015 (JP)
(72) Inventor: MORI Ryohei, Kawanishi-shi, Hyogo 666-0015 (JP)
(74) Representative: Appleyard Lees IP LLP
(86) International application number: PCT/JP2024/009122
(87) International publication number: WO 2024/247432

(57) **Abstract**

The purpose of the present invention is to provide a coloring composition that: makes it possible to obtain a glossy drawing or a beautiful drawing having little mottling; is excellent in drawing feel and long-term stability; and can contribute toward environmental conservation.

This coloring composition contains a carbon-based powder as a pigment component, and is such that 70 mass% or more of the carbon-based powder is constituted by particles having a particle diameter in the range of 50-600 nm, e.g., 100-400 nm, according to a dynamic light scattering method. Preferably, 5 mass% or more of the carbon-based powder is constituted by particles having a particle diameter in the range of 400-600 nm. The carbon-based powder also preferably has a fixed carbon content of 40-98 mass%. Preferably, 70 mass% or more of the carbon-based powder is constituted by biomass carbon.

## Description

### TECHNICAL FIELD

The present invention relates to a carbon-based coloring composition, more specifically to a coloring composition containing a specific carbon-based powder as a pigment component, particularly a black ink.

### BACKGROUND ART

Conventionally, carbon-based materials have been used as black pigments. For example, the kinds of "soot" have been used as writing black pigments since ancient times. In recent years, carbon blacks produced by thermal decomposition of petroleum-based gases or oils have been widely used. Above all, carbon blacks produced by a furnace method have performed the central role in carbon for pigments because of easy control for particle diameters and the like and its high yield (for example, see Patent Documents 1 and 2).

Carbon blacks generally have a tendency that the smaller the average particle diameter, the higher the blackness and tinting power. Thus, most commercially available carbon blacks for pigments have an average particle diameter of approximately 10 to 60 nm, particularly 15 to 40 nm. On the other hand, from the viewpoint of obtaining aesthetically pleasing drawn objects or printed matters, use of carbon blacks with larger particle diameters has also been discussed. For example, Patent Document 3 discloses an India ink composition containing a carbon black with a particle diameter distribution of about 0.1 to 0.5 µm and argillaceous minerals. Patent Document 4 discloses use of a lamp black with a median primary particle diameter of 50 to 200 nm as a pigment from the viewpoint of uniformly forming an electrodeposition paint film on a metal substrate surface.

Furthermore, in terms of the departure from dependence on petroleum for global environmental protection, replacement of carbon black pigments with biogenic carbon such as charcoal, so called biomass carbon is beginning to be discussed. For example, Patent Document 1 discloses a non-petroleum black ink containing a pigment made of a water-based carrier and carbonized marijuana. Also, in the method for producing carbon black disclosed in Patent Document 2, a biomass powder such as wood powder is used as a raw material.

### Citation List

### Patent Document

Patent Document 1: Japanese Unexamined Patent Application (Translation of PCT Application), Publication No. 2022-529318
Patent Document 2: PCT International Publication No. WO2011/013161
Patent Document 3: Japanese Unexamined Patent Application, Publication No. H6-234946
Patent Document 4: Japanese Unexamined Patent Application (Translation of PCT Application), Publication No. 2023-507510

### DISCLOSURE OF THE INVENTION

### Problems to be Solved by the Invention

Although general-purpose carbon black pigments (carbon black for coloring) are excellent in blackness and tinting power, they have a tendency that an expressive range is limited when they are used for aesthetic purposes, especially for the artistic applications. For example, as described in Patent Document 3, common rubbed India ink liquids and the like tend to hardly achieve beautiful drawings with "clear baselines" and "beautiful blur" compared to rubbed India ink liquids. This may be because carbon blacks have a wide particle diameter distribution of about 0.05 to 5 µm, in contrast, carbon blacks in an India ink have a particle diameter range of about 0.05 to 0.5 µm, and general-purpose carbon black pigments have a particle diameter range of about 10 to 60 nm, both of which exhibit narrow distributions. Since coloring with carbon blacks tends to result in a monotonous color tone, traditional carbon materials are often used for high-grade inks. Also, general-purpose carbon blacks are difficult to achieve a glossy drawing like a pencil sketch.

However, even if an average particle diameter or particle diameter distribution of a carbon black for coloring is simply increased e.g. by an ink or the like, a beautiful drawing cannot be necessarily obtained. As described in Examples below, a coloring composition containing a carbon-based pigment composed mainly of a powder with a particle diameter of larger than 600 nm tends to cause mottling in drawings and deteriorate a drawing feel.

In particular, liquid coloring compositions such as ink and paint have a disadvantage that coarse particles settle quickly, and therefore long-term stability can be hardly ensured. The reason why the argillaceous minerals are used in the technology described in Patent Document 3 is because sedimentation of the particles needs to be prevented. Originally, in Patent Document 3, a commercially available carbon black with an average particle diameter of 20 to 30 nm is exclusively used. Also, in the paint composition described in Patent Document 4, the material actually used is a lamp black with an average particle diameter of approximately 100 nm. For a coloring composition containing a carbon-based pigment with an average particle diameter significantly exceeding 100 nm, it is considered that some factors other than the average particle diameter need to be suppressed in terms of expressing good properties.

The technologies using biomass carbon as a carbon-based pigment also have problems to be solved. For example, charcoal that is a representative biomass carbon becomes remarkably hard depending on a temperature during carbonization. As a result, it is difficult to obtain a fine particle, such as a carbon-based powder with a particle diameter of less than 1 µm. In Patent Document 1, coal ground to 2 to 5 µm is used as a pigment, but this cannot achieve good drawing feels and hardly endures a long-term stability. In the technology described in Patent Document 2, biomass is micronized to 1 to 100 µm at a raw material stage, and then thermally decomposed at a relatively low temperature of 400 to 600°C for carbonization, resulting in a carbon black with a particle size of 10 to 30 nm. However, carbon produced through such low-temperature thermal decomposition makes it difficult to achieve a glossy drawn like a pencil sketch.

The present invention is embodied to solve the above problems, and an object of the present invention is to provide a coloring composition excellent in drawing feel and long-term stability, which can achieve a beautiful drawing with little mottling and a glossy drawing, and contribute to the environmental protection.

### Means for Solving the Problems

As a result of intensive studies to solve the above problems, the prevent inventors have found that, by controlling a particle diameter distribution of a carbon-based powder for use as a pigment component, it is possible to obtain a coloring composition that can easily achieve a beautiful drawing and a glossy drawing and is excellent in drawing feel and long-term stability, and to utilize a biomass carbon as such a carbon-based powder. This finding has completed the present invention.

In other words, the present invention provides the following (1) to (10).
(1) A coloring composition containing a carbon-based powder as a pigment component, in which
   not less than 70 mass% of the carbon-based powder is composed of particles with a particle diameter ranging from 50 to 600 nm according to a dynamic light scattering method.
(2) The coloring composition according to (1), in which not less than 5 mass% of the carbon-based powder is composed of particles with a particle diameter ranging from 400 to 600 nm according to the dynamic light scattering method.
(3) The coloring composition according to (1) or (2), in which the carbon-based powder has a fixed carbon content of 40 to 98 mass%.
(4) The coloring composition according to any one of (1) to (3), in which the carbon-based powder has an ash content of 2 to 40 mass%.
(5) The coloring composition according to any one of (1) to (4), in which not less than 70 mass% of the carbon-based powder is composed of biomass carbon.
(6) The coloring composition according to (5), in which the biomass carbon is a byproduct of fuel gas preparation in gasification type biomass power generation.
(7) An ink, paint, powder paint, coloring material, crayon, pastel, conte, or solid India ink, composed of the coloring composition according to any one of (1) to (6).
(8) A water-based ink composed of a composition containing the coloring composition according to any one of (1) to (6), containing a water-soluble polymer and water, together with the carbon-based powder.
(9) An oil-based ink composed of an oil-based composition containing the coloring composition according to any one of (1) to (6), containing an organic solvent as well as one or more binders selected from a group consisting of a thermoplastic polymer, a thermosetting polymer precursor, and a vegetable oil, together with the carbon-based powder.
(10) A polymer composition or polymer molded article containing the coloring composition according to any one of (1) to (6).

### Effects of the Invention

The coloring composition according to the present invention makes it easy to achieve a beautiful drawing with little mottling or a glossy drawing. Also, the coloring composition according to the present invention is excellent in drawing feel and long-term stability, and can contribute to the environmental protection particularly by using biomass carbon as a pigment.

### BRIEF DESCRIPTION OF THE DRAWINGS

FIG. 1 is a schematic diagram presenting an example of a particle diameter distribution of a carbon-based powder usable for a coloring composition according to the present invention;
FIG. 2 is a histogram presenting a result of measuring a particle diameter distribution of a carbon-based powder used in Example 1 according to a dynamic light scattering method; and
FIG. 3 is a histogram presenting a result of measuring a particle diameter distribution of a carbon-based powder used in Comparative Example 1 according to a dynamic light scattering method.

### PREFERRED MODE FOR CARRYING OUT THE INVENTION

Representative embodiments of the present invention will be explained below in detail, but the present invention is not limited thereto.

### <<Coloring Composition>>

This embodiment relates to a coloring composition containing carbon-based powder as a pigment component, in which not less than 70 mass% of the carbon-based powder is composed of particles with a particle diameter range of 50 to 600 nm according to a dynamic light scattering method. Main components of the coloring composition, such as a carbon-based powder will be explained below.

### <Carbon-Based Powder>

In this embodiment, the carbon-based powder encompasses all of powders predominantly containing carbon, e.g. powders having a fixed carbon content of not less than 40 mass%. Examples of the carbon-based powder include, but are not limited to: carbon black, e.g. furnace black, thermal black, lamp black, acetylene black, channel black, contact black, and Ketjen black; biomass carbon such as coal, e.g. charcoal, bamboo charcoal, animal charcoal, and brown coal; various activated carbons and carbonized materials such as tar; as well as natural graphite and synthetic graphite. As the coloring composition according to the present embodiment, any type of carbon-based powder may be used, and a carbon-based powder with desired properties can be used depending on an intended purpose. The chemical properties of a suitable carbon-based powder will be described below in detail.

As the most significant characteristic of the coloring composition according to this embodiment, the carbon-based powder as the pigment component at a proportion of not less than 70 mass% to the total amount of the particles has a particle diameter distribution range of 50 to 600 nm. As a result of this particle diameter distribution, the coloring composition according to this embodiment makes it easy to achieve a beautiful drawing with clear baselines, beautiful blur, and little mottling. Although the pigment component has a relatively large average particle diameter, the coloring composition hardly settles e.g. when formulated into an ink, and exhibits an excellent long-term stability. Furthermore, the type of the carbon-based powder to be blended can be appropriately selected depending on an intended purpose to produce a coloring composition suitable for a glossy drawing like a pencil sketch, a drawing with high blackness, and the like. Next, the particle diameter distribution of the carbon-based powder will be explained.

### [Particle Diameter Distribution of Carbon-Based Powder]

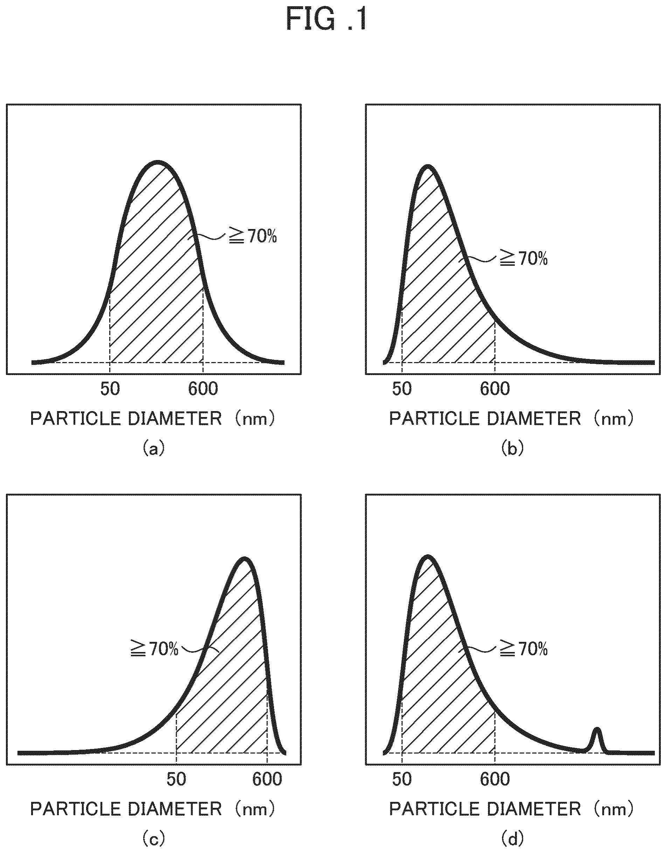

In the coloring composition according to this embodiment, not less than 70 mass% of the carbon-based powder as the pigment component is composed of particles with a particle diameter range of 50 to 600, e.g. 100 to 400 nm according to a dynamic light scattering method. In this case, the carbon-based powder may have any particle diameter distribution as long as "not less than 70 mass% of the carbon-based powder is composed of particles with a particle diameter range of 50 to 600 nm". For example, the carbon-based powder may have a particle diameter distribution close to a normal distribution as presented in FIG. 1(a), or a distribution biased toward a smaller or larger particle diameter side as presented in FIG. 1(b) or FIG. 1(c). The carbon-based powder may have a distribution with two peaks within the range of 50 to 600 nm, or a distribution with a small peak outside the range of 50 to 600 nm as presented in FIG. 1(d).

In the coloring composition according to this embodiment, a carbon-based powder with a desired particle diameter distribution can be used depending on the purpose and application. For example, when a carbon-based powder with a particle diameter distribution with a small peak in a region of higher than 600 nm, particularly about 1 to 5 µm as presented in FIG. 1(d) is blended into the coloring composition such as an ink or a paint, a beautiful drawing with "clear baseline" and "beautiful blur" like a drawing drawn with rubbed India ink liquid can be easily achieved without significantly compromising the long-term stability.

The blackness of the coloring composition can also be adjusted by adjusting the particle diameter distribution of the carbon-based powder. For example, carbon blacks generally have a tendency that the smaller the average particle diameter, the higher the blackness. Even if a plurality of carbon blacks have similar average particle diameters, there is a tendency that the wider the particle diameter distribution, the lower the blackness. Thus, it is also possible to enhance the blackness of the coloring composition e.g. by using a carbon-based powder containing particles with a particle diameter range of 50 to 600 nm, particularly 100 to 400 nm, accounting for not less than 70 mass%, preferably 75 to 99 mass%, particularly preferably 80 to 95 mass% based on the total amount of the carbon-based powder. Furthermore, it is also possible to produce a coloring composition that makes it easy to achieve a beautiful drawing by using a carbon-based powder, the powder at a proportion of not less than 5 mass%, e.g. 7 to 30 mass%, preferably 8 to 20 mass%, particularly preferably 10 to 15 mass% based on the whole powder, having a particle diameter range of 400 to 600 nm, e.g. 400 to 500 nm according to the dynamic light scattering method.

When a plurality of carbon blacks have similar average particle diameters and particle diameter distributions, carbon blacks with a larger specific surface area i.e. with a higher roughness tend to have higher blackness. Blackness of biomass carbon such as charcoal varies depending not only on the particle diameter but also on the ash content and the firing temperature. It is possible to produce a coloring composition suitable for the desired drawing characteristics by selecting a desired carbon-based powder from those with various particle diameter distributions and material properties, or by combining multiple types of the carbon-based powders.

When preparing a carbon-based powder with a desired particle diameter distribution, for example, carbon-based powders with a known particle diameter distribution may be used alone or in combination of two or more types, but, for example, a carbon-based powder with an average particle diameter of larger than 600 nm may be ground as described later. In the present invention, the value of the particle diameter of the carbon-based powder is specified according to the dynamic light scattering method, but, when selecting or preparing the carbon-based powder, values determined according to other methods such as electron microscopy or specific surface area measurement, or even catalog values, may also be used as references. The chemical properties of the carbon-based powder, such as the composition and material properties will be explained below.

### [Composition of Carbon-Based Powder]

Carbon-based powders typically contain not only carbon but also water, ash, and the like. The components remaining in the carbon-based powder from which water, ash, and volatile components have been removed are referred to as "fixed carbon", and its ratio varies depending on the type and the manufacturing condition of the carbon-based powder. For example, fixed carbon contents of commercially available carbon blacks for rubber and coloring carbon blacks are typically as high as 99 mass% or higher and about 90 to 95 mass% respectively, and biomass carbons have a relatively low fixed carbon content of about 35 to 90 mass%, the content significantly varying depending on the type. As for a fixed carbon content of charcoal as a representative example of biomass carbon, black charcoal produced at a low carbonization temperature (typically 400 to 700°C) has a fixed carbon content of typically 60 to 85 mass%, mostly about 65 to 80 mass%, and white charcoal produced at a high carbonization temperature (typically 800°C or more) has a fixed carbon content of typically 70 to 95 mass%, mostly about 75 to 85 mass%.

When the carbon-based powder has a fixed carbon content of 40 to 98 mass% in the coloring composition according to the present embodiment, drawing expressions with a wider range of variation can be achieved. For example, a glossy drawing with a grayish tone like a pencil sketch can be easily achieved by blending a carbon-based powder with a fixed carbon content of 40 to 80 mass%, particularly about 50 to 70 mass%. Furthermore, a clear drawing with high blackness and distinct light and shade can be easily achieved by blending a carbon-based powder with a fixed carbon content of 70 to 98 mass%, particularly about 80 to 95 mass%.

Also, the ash content of the carbon-based powder is not particularly limited. Typically, general-purpose carbon black has an ash content of about not more than 1 mass%. Among biomass carbons, general charcoal has an ash content of typically 1 to 10 mass%, mostly about 2 to 5 mass%, but, in some cases, about 40 mass% depending on the raw materials and the production method. For example, since a glossy drawing like pencil sketch may be easily achieved depending on the ash content in some cases, any carbon-based powder with any ash content can be used depending on the intended purpose in the coloring composition according to this embodiment. For example, the carbon-based powder may have an ash content of, but not limited to, 2 to 40 mass%.

Since an affinity of the carbon-based powder with a solvent or a binder constituting the coloring composition may vary depending on an ash content or volatile organic components contained in the carbon-based powder, a high ash content is not necessarily undesirable. Since a multipurpose carbon-based powder containing e.g. 5 to 30 mass%, particularly 10 to 25 mass% of volatile organic components often has a large amount of functional groups such as carbonyl groups or hydroxyl groups on its surface, the carbon-based powder may be excellent in the affinity with binders and the like used in combination and dispersibility in the coloring composition, resulting in sufficient long-term stability. For the carbon-based powder, an appropriate type should be selected in consideration of the affinity with the components other than the pigment and the dispersibility together with the desired drawing characteristics.

From the viewpoint of obtaining a coloring composition that can easily achieve a beautiful black drawing and is excellent in the pigment dispersibility and long-term stability, it is possible to use a carbon-based powder with a fixed carbon content of 60 to 95 mass%, more preferably 70 to 90 mass%, particularly preferably 75 to 85 mass%, an ash content of 2 to 20 mass%, particularly preferably 3 to 10 mass%, and contents of water and volatile components such as organic components of 1 to 25 mass%, more preferably 1 to 10 mass%, particularly preferably about 2 to 5 mass%. However, these component amounts are merely measures, and even if the values fall outside these ranges, a coloring composition that provides beautiful drawings and has excellent long-term stability can be formed depending on the type of the carbon-based powder. Some types of representative carbon-based powders suitable for the coloring composition according to this embodiment will be explained below.

### [Carbon Black]

For the coloring composition according to this embodiment, general carbon blacks can be used as the carbon-based powder for the pigment component. Various types of carbon blacks are commercially available for coloring, rubber reinforcement, and other purposes, and an appropriate type can be easily selected according to the desired drawing characteristics and dispersibility.

Various types of carbon blacks such as furnace black and lamp black can be used as described above, but it is preferable to use thermal black as a main component in terms of a requirement that not less than 70% of the particles have a particle diameter range of 50 to 600 nm. Since commercially available thermal blacks have an average particle diameter of about 150 to 500 nm, these thermal blacks can be used alone or in combination of two or more types to obtain a carbon-based powder, the powder at a proportion of not less than 70 mass% based on the particles, having a particle diameter range of 50 to 600 nm, e.g. 100 to 400 nm.

Thermal black may be used in combination with a furnace black, a coloring carbon black, or other carbon-based powders. Thermal black generally has a relatively small specific surface area of about 5 to 15 m²/g and tend to have low blackness. Thus, thermal black can be used in combination with various furnace blacks with a specific surface area of 20 to 150 m²/g or coloring carbon blacks with a specific surface area of 20 to 600 m²/g, particularly about 50 to 300 m²/g to adjust thermal black so as to have desired blackness. These carbon blacks can be used in combination with biomass carbon described below.

### [Biomass Carbon]

Biomass carbon refers to carbonized materials made of biological resources, such as charcoal and bamboo charcoal. Specifically, biomass carbon is defined as "solid material produced by heating biomass at a temperature exceeding 350°C under an oxygen concentration controlled to a level where combustion does not occur", in some cases. Example of biomass carbon include not only charcoal and bamboo charcoal but also various types, such as rice husk or rice straw-derived carbon, animal bone or livestock excreta-derived animal charcoal, and papermill sludge or sewage sludge-derived carbon. For the coloring composition according to this embodiment, any of the recited biomass carbons can be used.

The use of biomass carbon can also contribute to the environmental protection. In the coloring composition according to this embodiment, it is desirable that preferably not less than 70 mass%, more preferably not less than 80 mass%, even more preferably not less than 90 mass%, particularly preferably almost 100 mass% of the carbon-based powder is used as biomass carbon. For example, byproducts from fuel gas preparation in gasification type biomass power generation can be utilized as pigment components to achieve a considerable contribution to the environmental protection through departure from dependence on petroleum.

### (Byproduct of Biomass Power Generation)

Biomass power generation refers to overall power generation systems using biomass as fuel in general. Above all, a gasification type biomass power generation refers to a method in which biomass such as wood is thermally decomposed in a gasification furnace to produce a combustible gas, and this gas is used as a fuel gas to drive an engine for power generation. This method has an advantage that efficient and stable power generation can be achieved with little influence of heat dissipation even if the overall system is small in scale, compared to the direct combustion method in which a high-pressure steam is generated using the heat from biomass combustion and a steam turbine is rotated for power generation. In this method, carbonized biomass is produced as a byproduct together with the fuel gas during the gasification of biomass. This byproduct is useful as a pigment component in the coloring composition according to this embodiment.

During the gasification of biomass, biomass-derived tar components may be generated. This tar can be carbonized and used as a pigment component in the coloring composition according to the present embodiment. Such carbonized tar components and the carbonized byproducts from gasification are varieties of charcoal. Also, when these components are formed into carbon-based powders with a desired particle diameter distribution, a general-purpose grinding method for charcoal or the like can be applied. The carbon-based powder used in this embodiment will be further explained below with reference to examples of charcoal and bamboo charcoal, which are representative examples of biomass carbon.

### (Charcoal and Bamboo Charcoal)

Charcoal and bamboo charcoal are carbon-based materials obtained by heating wood and bamboo respectively (hereinafter collectively referred to as "woody materials" in some cases) under a low-oxygen atmosphere. Generally, when wood-based materials are heated, thermal decomposition occurs at 150 to 400°C, carbonization (charcoalization) occurs at 250 to 800°C, carbonization occurs at about 600 to 1800°C, and graphitization occurs at about 1,600°C or higher. When such heating is performed under a low-oxygen atmosphere, such as in a charcoal kiln, thermal decomposition rapidly begins at 250 to 300°C, and carbonization progresses. Generally, charcoal obtained by heating to about 400 to 700°C is called black charcoal, and charcoal obtained by heating to a high temperature of 800°C or higher is called white charcoal. Black charcoal is typically made of wood such as deciduous oak and has an advantage of easy ignition. White charcoal is typically made of hardwood such as evergreen oak and has an advantage of maintaining a stable firepower for a long period of time. Binchotan charcoal is a type of white charcoal.

The properties of charcoal are influenced not only by the raw materials but also by the production method and conditions. For example, general black charcoal contains 60 to 85 mass% of fixed carbon, 1 to 5 mass% of ash, 5 to 10 mass% of water, and about 10 to 25 mass% of volatile components, meanwhile general white charcoal contains 70 to 90 mass%, particularly 75 to 85 mass% of fixed carbon, 1 to 5 mass%, particularly 2 to 3 mass% of ash, 5 to 10 mass% of water, and about 5 to 10 mass% of volatile components. Note that bamboo charcoal can be prepared by the same production method as for charcoal and can be formed into a carbon-based powder with properties similar to those of charcoal. However, when produced under the same conditions as of charcoal, bamboo charcoal tends to be harder than charcoal and have a relatively high ash content of e.g. 10 to 40 mass%, typically 15 to 30 mass% in some types of bamboo used as a raw material.

Charcoal and bamboo charcoal have a tendency that the higher the carbonization temperature during production or the more the ash content, the lower the blackness, and the higher the glossiness. Charcoal and bamboo charcoal also have a tendency that the higher the carbonization temperature, the higher the specific gravity, and the higher the hardness. For example, the specific gravity of charcoal is about 1.5 to 1.7 at a carbonization temperature of 350 to 450°C, and about 1.8 to 1.9 at a carbonization temperature of 1000 to 1500°C. Under a condition that a lead piece has a hardness of 1, and a steel piece for saw has a hardness of 20, the hardness of charcoal is generally about 1 to 3 at a carbonization temperature of 500°C or lower, generally about 5 to 15, generally about 7 to 10 at a carbonization temperature of about 600 to 700°C, or 16 to 20 at a carbonization temperature of 800°C or higher, although the hardness varies depending on wood as a raw material. These tendencies may be used as a reference when selecting a carbon-based powder according to a desired drawing characteristic or when adjusting the carbon-based powder so as to have a desired particle diameter distribution.

### (Activated Carbon)

Activated carbon is a carbon-based powder prepared by activating a carbonized material, typically charcoal or bamboo charcoal to increase its surface area. Activation is generally performed by heating a carbonized material under a steam atmosphere at about 800 to 1200°C. Most charcoal has a small specific surface area of about 200 to 400 m²/g, and in some varieties, about 10 to 100 m²/g, but the specific surface area can be enlarged to about 800 to 1200 m²/g by activation. Typically, coals with a specific surface area of smaller than 800 m²/g are referred to as charcoal, and coals with a specific surface area of 800 m²/g or larger are referred to as activated carbon, but there is no fundamental difference therebetween. Thus, when using activated carbon as the carbon-based powder according to this embodiment, its variety can be selected in accordance with the same criteria as for charcoal and bamboo charcoal.

### (Graphite)

Graphite can also be used as the carbon-based powder according to the present invention. Graphite is also referred to as "black lead" or "plumbago", which is a layered material with a hexagonal plate-like crystal. Because of its unique metallic gloss, graphite is a useful pigment component for a coloring composition intended to achieve characteristics of a drawing like pencil sketch. Various types of natural graphite and synthetic graphite can be used as graphite. However, used pencils, mechanical pencil lead, or the like are collected and ground to prepare a carbon-based powder, and this powder can be used for the coloring composition according to this embodiment.

### [Adjustment of Particle Diameter]

As described above, in the coloring composition according to this embodiment, various carbon-based powders can be used as pigment components, but it is preferable to use amorphous carbon such as carbon black or biomass carbon, particularly biomass carbon such as charcoal or bamboo charcoal. In particular, biomass carbon such as charcoal or bamboo charcoal has lower hardness and is easier to grind compared to graphite and the like, and therefore can be easily adjusted so as to have a desired particle diameter distribution.

The method for adjusting the particle diameter is not particularly limited, and it is possible to use various conventional methods such as ball mill grinding, jet mill grinding, roll mill grinding, bead mill grinding, sand mill grinding, salt mill grinding, and colloidal mill grinding. If the carbon-based powder is a biomass carbon such as wood charcoal and bamboo charcoal, the carbon-based powder can be ground by shear force during the preparation of the coloring composition to adjust the particle diameter distribution to a value specified in this embodiment. For example, a carbon-based powder with a large particle diameter is kneaded together with a polymer material that serves as a binder in the coloring composition under a high shear force, so that the carbon-based powder can be uniformly dispersed in the binder, and simultaneously its particles are ground by shear force to adjust the particle diameter distribution to an appropriate value. A method for preparing components other than the carbon-based powder, such as the binder, as well as the coloring composition according to this embodiment will be explained below.

### <Formation of Coloring Composition>

A coloring composition can be formed using the carbon-based powder as described above. Inks, paints, and the like can be formed e.g. by mixing the aforementioned carbon-based powder with a binder such as a polymer or a solvent. When a thermosetting resin or oil is used as the binder, a kneaded mixture of the binder and the carbon-based powder can also be used as a powder paint. The kneaded mixture of the carbon-based powder and the binder may be mixed with a drying oil, water, or the like to form an oil-based or water-based coloring material. The carbon-based powder can also be mixed with beeswax or wax to form crayon; with paste such as carbohydrate to form pastel; with clay, cellulose, or the like to form conte; or with glue or the like to form solid India ink. Also, the present invention encompasses ink, paint, powder paint, coloring material, crayon, pastel, conte, solid India ink, and the like, which are made of the coloring composition according to this embodiment. Components other than the carbon-based powder usable in the coloring composition according to this embodiment will be explained below.

### <Binder>

The binder for use in the coloring composition according to this embodiment is not particularly limited, and conventional polymers, drying oils, or the like can be used as the binder. Examples of the polymers include, but are not limited to, acrylic polymers, such as (meth)acrylic acid, (meth)acrylic acid ester, (meth)acrylamide, and (meth)acrylonitrile; alkyd resins; polyamides; polyurethanes; vinyl resins, such as polyvinyl alcohol(PVA), polyvinyl pyrrolidone (PVP), and polyvinyl butyral(PVB); polyalkylene oxides, such as polyethylene oxide (PEO) and polypropylene oxide; carbohydrates, such as carboxymethyl cellulose (CMC),alginate, and gum arabic; as well as silicone resins. Thermosetting polymers such as epoxy resins, phenolic resins, urea resins, and unsaturated polyester resins may also be used as the binder. Elastomers such as natural rubber (NR), epoxidized NR, styrene-butadiene rubber (SBR), carboxylated SBR, nitrile-butadiene rubber (NBR), carboxylated NBR, and acrylic rubber may also be used as the binder.

The binder may be in liquid form. For example, a carbon-based powder with an adjusted particle diameter distribution can be mixed with a polymer emulsion, latex, a solution, or the like to form water-based or oil-based inks, paints, or the like. Since the drying oils such as linseed oil, castor oil, poppy oil, and sunflower oil are in liquid form before the drying (oxidation polymerization), these oils can be mixed with the carbon-based powder to form inks, paints, or the like.

In a more preferable aspect according to this embodiment, a polymer that is solid at room temperature is used as the binder. The carbon-based powder is ground while being kneaded together with a solid binder, and the resulting kneaded mixture is dissolved in water or an organic solvent to form inks, paints, or the like containing the carbon-based powder with an adjusted particle diameter distribution as the pigment component. For example, PVA, PVP, or the like with a polymerization degree of 500 to 3000, particularly about 1000 to 2000 may be used.

In this case, when a water-soluble resin such as acrylic polymers, PVA, PVP, PEO, and CMC is used as the binder, water-based inks or water-based paints can be formed by further addition of water. Also, when a thermoplastic polymer such as an alkyd resin or PVB, a thermosetting polymer precursor such as an epoxy compound, or a vegetable oil such as linseed oil is used as a binder, oil-based inks or oil-based paints can be formed. The present invention also encompasses: a water-based ink composed of a composition containing the aforementioned carbon-based powder as well as a water-soluble polymer and water; and an oil-based ink composed of an oil-based composition containing the aforementioned carbon-based powder, an organic solvent, as well as one or more binders selected from a group consisting of a thermoplastic polymer, a thermosetting polymer precursor, and a vegetable oil.

### <Solvent>

In the case that the coloring composition according to this embodiment is a water-based ink or paint, needless to say, the main solvent is water, but the main solvent may additionally contain alcohols such as ethanol, 1-propanol, and 2-propanol, or glycol ethers such as ethyl cellosolve (ethylene glycol monoethyl ether) and butyl cellosolve (ethylene glycol monobutyl ether). However, from the viewpoint of safety for human bodies and the environmental protection, water accounts for preferably not less than 90 mass%, particularly not less than 95 mass% of the solvent, more preferably the total amount of the solvent. In the case that the coloring composition according to this embodiment is an oil-based ink or paint, it is preferable to select a solvent from various known organic solvents in accordance with the solubility of the binder and the properties of the desired coloring composition.

### <Other Additives>

As additives, components other than the carbon-based powder and the binders may be blended into the coloring composition according to the present embodiment, especially the liquid composition such as ink and paint. Examples of the additives include, but are not limited to, glazing agents, matting agents, viscosity adjusters, surfactants, emulsifiers, antifoamants, pH adjusters, dispersants, stabilizers, antirust agents, antistatic agents, chelating agents (complexing agents), fluidity regulating agents, preservatives, antioxidants, antidegradants, bactericidal agents, antibacterial agents, UV absorbers, and extreme pressure agents, as well as various drugs, fragrant agents, sweeteners, inorganic fillers, lubricants, and plasticizers.

In the coloring composition according to this embodiment, since the particle diameter distribution of the carbon-based powder has been adjusted, the powder is dispersed in the composition with high uniformity, and the settling of powders with larger particle diameters is suppressed to achieve a long-term stability. However, the stability can be further improved by addition of a surfactant, a viscosity adjuster, or the like. The color tone of the coloring composition can be arbitrarily changed by adding a black pigment other than the carbon-based powder, such as aniline black and an iron oxide pigment, as well as a pigment or dye with another color tone. When blending such additives, it is preferable that an amount of each of the additives is 0.1 to 5 mass%, particularly 0.5 to 2 mass%, and the total amount thereof is 0.1 to 15 mass%, particularly about 0.5 to 5 mass%.

### <<Preparation of Coloring Composition>>

The coloring composition according to this embodiment can be prepared by mixing the aforementioned components including the carbon-based powder and other components. A preferable method for preparing the coloring composition will be explained below with reference to an embodiment of preparing a water-based ink as an example, but the present invention is not limited to such an embodiment.

### <Preparation of Ink>

The ink according to the present invention can be prepared by mixing the carbon-based powder, the binder, the solvent, and optionally additives e.g. in a mass ratio of 4 to 40:1 to 30:30 to 95:0 to 15, particularly 8 to 30:7 to 25:50 to 85:0 to 5. The mixing order of these components is not particularly limited, but, when the binder is a solid polymer, it is preferable to first knead the carbon-based powder into the binder, and then dissolve or disperse this kneaded mixture in the solvent. It is preferable that, when the additives to be optionally blended are solid, the additives are kneaded together with the carbon-based powder into the binder, and when the additives are liquid, the additives are added to the solvent during the dissolution of the kneaded mixture.

Generally, during kneading of the carbon-based powder into the solid polymer, a strong shear force is applied to the carbon-based powder. By this shear force, if the particles of the carbon-based powder have the same hardness, the particles are ground starting from particles with larger particle diameters e.g. 1 µm or larger. On the other hand, particles with smaller particle diameters e.g. 100 nm or smaller are less susceptible to shearing, and their particle diameters do not significantly change during kneading. As a result, for example, even if the carbon-based powder with an average particle diameter of larger than 600 nm e.g. 1 to 2 µm or larger is used as a raw material, not less than 70 mass% of the particles can be refined into a carbon-based powder with a particle diameter range of 50 to 600 nm, e.g. 100 to 400 nm after the kneading. Thus, according to this embodiment, the carbon-based powder according to the specifications of the present invention can be sufficiently dispersed in a polymer binder.

Such refinement with shear force during the kneading is remarkable in biomass carbon such as charcoal and bamboo charcoal, particularly carbon-based powders with a charcoal hardness of about 1 to 15, such as black charcoal and black bamboo charcoal. From this perspective, biomass carbon with a charcoal hardness of 1 to 15, preferably 2 to 10, particularly preferably 3 to 8 is desirable. On the other hand, when a high-shear kneader can be used and a glossy drawing characteristic is desired, biomass carbon with a charcoal hardness of 8 to 18, preferably 10 to 16, particularly preferably about 12 to 15 can also be used. Since biomass carbon has functional groups such as carbonyl groups and hydroxyl groups on its surface like general-purpose carbon black in many cases, these functional groups interact with the polymers in the binder during the kneading, so that biomass carbon can be easily dispersed uniformly in the binder. Thus, inks or paints obtained by dissolving or dispersing such a kneaded mixture have a low risk of settling, even when the carbon-based powder has a relatively large particle diameter of 100 nm or larger.

### [Kneading Method]

The method for kneading the carbon-based powder into the binder is not particularly limited, and various conventional methods can be used. Preferable examples of the method include, but are not limited to, a method of applying high shear force during kneading, e.g. a method using an extruder such as a twin-screw extruder, a double roll mill such as a rubber kneading roll, a Banbury mixer, or a kneader. Also, the kneading conditions are not particularly limited, but from the viewpoint of enhancing shear force, it is preferable to perform the kneading at temperatures about 1 to 10°C higher than the temperature at which the polymer to be used as the binder is softened, or at a temperature around the melting point of the polymer.

The kneading can also be performed in two stages. For example, 70 to 90 mass% of the total amount of the carbon-based powder is kneaded at the first stage, and then 30 to 10 mass% of the carbon-based powder with higher hardness or the carbon-based powder with a larger particle diameter is kneaded at the second stage, to facilitate preparation of the coloring composition containing pigment components with the particle diameter distribution as presented in FIG. 1 (d). Furthermore, it is possible to implement a process in which a kneaded mixture is prepared using a sealed type kneader such as a Banbury mixer and a kneader, then the kneaded mixture is passed through a double roll mill, a triple roll mill, or the like, and subjected to multiple shear force applications through cooling and rolling.

Subsequently, the kneaded mixture obtained as described above can be dissolved or dispersed in water or an organic solvent to form a water-based or oil-based ink. The dissolution and dispersion method are not particularly limited, and can be implemented by using a conventional stirrer such as a disperser, a ball mill, an SG mill, a roll mill, and a planetary mixer.

### <<Applications of Coloring Composition>>

The coloring composition according to the present invention is excellent in drawing feel and long-term stability, and is useful for creating a beautiful drawing with little mottling and a glossy drawing. For this reason, the coloring composition according to the present invention is suitable not only for applications of printing, coating, marking, and the like but also for artistic applications. When biomass carbon such as charcoal and bamboo charcoal, especially activated carbon is used as the carbon-based powder, it is also possible to provide an adsorption effect to the coating film. Also when blended into a polymer composition or a molded article, the coloring composition according to the present invention can form a characteristic appearance with glossy black or the like, or provide an adsorption effect. The present invention also encompasses a polymer composition and a polymer molded article containing the aforementioned coloring composition.

### EXAMPLES

The present invention will be explained below in more detail with reference to Examples. Note that these examples are provided only for the purpose of illustrating specific aspects and embodiments in terms of facilitating understanding of the concept and scope of the present invention disclosed in the present specification and described in the appended claims, and the present invention is not limited to these examples.

### [Example 1]

Bamboo charcoal and PVA (polyvinyl alcohol, manufactured by Fujifilm Wako Pure Chemical Corporation, average polymerization degree: 1500 to 1800) were used as a pigment component and a binder respectively to prepare a water-based black ink. As the bamboo charcoal raw material, a commercially available product produced at a carbonization temperature of 800°C and having an average particle diameter of about 10 µm (measured according to a dynamic light scattering method), an ash content of about 20 mass%, a fixed carbon content of 75 mass%, and a charcoal hardness of 15, was used.

Using a double roll mill, 50 g of the aforementioned bamboo charcoal was kneaded into 50 g of PVA at a temperature of 40 to 80°C. In 400 g of water, 100 g of the resulting kneaded mixture was dispersed (total amount: 500 g), and milled using a bead mill to prepare Ink sample-1 (bamboo charcoal content: 10 mass%, binder content: 10 mass%, based on the total amount of the ink).

### (Particle Diameter Distribution of Bamboo Charcoal Particle in Ink)

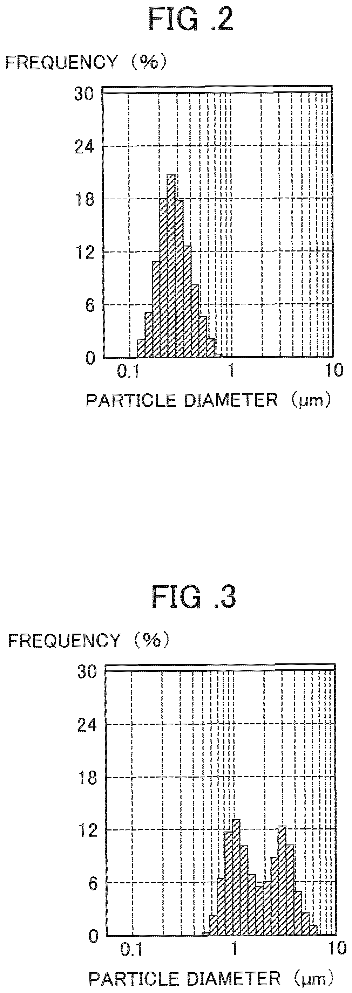

A portion of Ink sample-1 obtained above was sampled, and a particle diameter distribution of bamboo charcoal in the sample was measured using a particle diameter measurement instrument (Microtrack UPA-EX150, manufactured by Nikkiso Co., Ltd.) by a dynamic light scattering method. The measurement results are as presented in the following Table 1 and in the histogram of FIG.2. In the bamboo charcoal, 98 volume% (98 mass%) of the particles had a particle diameter range of 50 to 600, 85 volume% (85 mass%) of the particles had a particle diameter range of 100 to 400 nm, and 13 volume% (13 mass%) of the particles had a particle diameter range of 400 to 600 nm.

### (Drawing Test)

Ink sample-1 was applied to high-quality paper using No. 10 nylon flat brush for evaluating its drawing characteristic. This ink sample allowed smooth application without any discomfort to achieve a uniform drawing with a glossy appearance and no mottling. In Ink sample-1, bamboo charcoal particles did not settle even several days after the preparation.

### [Comparative Example 1]

Ink sample-2 was prepared by the same operation as in Example 1 except for not performing the kneading with the double roll mill. The results of the particle diameter distribution measurement of bamboo charcoal particles in this sample are presented in Table 1 and FIG. 3. The bamboo charcoal in Ink sample-2 had a large average particle diameter of 2062 nm, in which the particles with a particle diameter range of 50 to 600 nm accounted for about 1% of the total volume, and there were no particles with a particle diameter range of 100 to 400 nm. When the same drawing test as in Example 1 was performed using Ink sample-2, a discomfort of the brush tip caught by paper was felt during the application, and also the obtained drawing showed mottling. Furthermore, Ink sample-2 showed sedimentation of bamboo charcoal particles several days after the preparation.

**[Table 1. Measurement Results of Bamboo Charcoal Particle Diameter Distribution in Ink Sample-1 and Ink Sample-2]**

| | Ratio of particles with the following particle diameter range* | | | | Average particle diameter (nm) | Smallest particle diameter (nm) | Largest particle diameter (nm) |
|---|---|---|---|---|---|---|---|
| Sample | 50~600 nm | 100~400 nm | 400~600 nm | 500~600 nm | | | |
| Ink sample-1 | 98% | 85% | 13% | 3% | 297 | 144 | 818 |
| Ink sample-2 | 1% | 0% | 1% | 1% | 2062 | 578 | 6540 |

| | | | | | | | |
|---|---|---|---|---|---|---|---|
| * Ratio of particles with a particle diameter range of e.g. 50 to 600 nm, Unit: mass% | | | | | | | |

The above experimental results in this test indicated that use of the black ink according to the present invention made it possible to achieve a beautiful drawing with little mottling with a good drawing feel. Also, in the black ink according to the present invention, the pigment components did not settle, suggesting its excellent long-term stability. The bamboo charcoal used as a raw material is biomass i.e. a non-petroleum product and further can contribute to the environmental protection. From both points, the effects of the present invention are remarkably exhibited.

## Claims

1. A coloring composition comprising a carbon-based powder as a pigment component,
not less than 70 mass% of the carbon-based powder being composed of particles with a particle diameter ranging from 50 to 600 nm according to a dynamic light scattering method.

2. The coloring composition according to claim 1, wherein not less than 5 mass% of the carbon-based powder is composed of particles with a particle diameter ranging from 400 to 600 nm according to the dynamic light scattering method.

3. The coloring composition according to claim 1, wherein the carbon-based powder has a fixed carbon content of 40 to 98 mass%.

4. The coloring composition according to claim 1, wherein the carbon-based powder has an ash content of 2 to 40 mass%.

5. The coloring composition according to claim 1, wherein not less than 70 mass% of the carbon-based powder is composed of biomass carbon.

6. The coloring composition according to claim 5, wherein the biomass carbon is a byproduct of fuel gas preparation in gasification type biomass power generation.

7. An ink, paint, powder paint, coloring material, crayon, pastel, conte, or solid India ink, composed of the coloring composition according to any one of claims 1 to 6.

8. A water-based ink composed of a composition comprising the coloring composition according to any one of claims 1 to 6, comprising a water-soluble polymer and water, together with the carbon-based powder.

9. An oil-based ink composed of an oil-based composition comprising the coloring composition according to any one of claims 1 to 6, comprising an organic solvent as well as one or more binders selected from a group consisting of a thermoplastic polymer, a thermosetting polymer precursor, and a vegetable oil, together with the carbon-based powder.

10. A polymer composition or polymer molded article comprising the coloring composition according to any one of claims 1 to 6.
